Europäisches Patentamt

European Patent Office

Office européen des brevets

(11) Veröffentlichungsnummer : **0 068 188**
**B1**

(12) **EUROPÄISCHE PATENTSCHRIFT**

(45) Veröffentlichungstag der Patentschrift :
**09.10.85**

(51) Int. Cl.⁴ : **H 04 N   5/92,** H 04 N   9/82,
**G 11 B 15/14**

(21) Anmeldenummer : **82104993.9**

(22) Anmeldetag : **08.06.82**

(54) **Videorecorder mit verbesserter Aufzeichnung des Tonsignals.**

(30) Priorität : **01.07.81 DE 3125879**

(43) Veröffentlichungstag der Anmeldung :
**05.01.83 Patentblatt 83/01**

(45) Bekanntmachung des Hinweises auf die Patenterteilung : **09.10.85 Patentblatt 85/41**

(84) Benannte Vertragsstaaten :
**AT BE CH DE FR GB IT LI LU NL SE**

(56) Entgegenhaltungen :
EP-A- 0 061 050
DE-A- 2 201 691
DE-B- 1 277 900
GB-A-   979 496
US-A- 3 346 702
PATENTS ABSTRACTS OF JAPAN, Band 5, Nr. 133,
25. August 1981, Seite 805, E71
TOUTE L'ELECTRONIQUE, Nr. 444, Juni 1979, Seiten
8,9, Paris, Fr. J.-M.L.: "Un magnétoscope à cassettes
expérimental: le "fixed-head VCR" de Toshiba"

(73) Patentinhaber : **Licentia Patent-Verwaltungs-GmbH**
**Theodor-Stern-Kai 1**
**D-6000 Frankfurt/Main 70 (DE)**

(72) Erfinder : **Kluth, Hans-Jürgen, Ing. grad.**
**Gartenstrasse 14**
**D-3008 Garbsen 8 (DE)**

(74) Vertreter : **Einsel, Robert, Dipl.-Ing.**
**Licentia Patent-Verwaltungs-GmbH Theo-**
**dor-Stern-Kai 1**
**D-6000 Frankfurt/Main 70 (DE)**

## Beschreibung

Bei Videorecordern ist es bekannt, das Videosignal durch Frequenzmodulation eines Bildträgers auf sogenannten Schrägspuren aufzuzeichnen, die unter einem Winkel von ca. 6° schräg zur Längsrichtung des Bandes verlaufen. Dabei ist vorzugsweise entlang einer derartigen Schrägspur jeweils ein Halbbild aufgezeichnet. Aufzeichnung und Abtastung erfolgen mit zwei Köpfen, die jeweils abwechselnd die Schrägspuren abtasten.

Bei derartigen Geräten wird das Tonsignal auf einer parallel zur Bandkante verlaufenden Längsspur mit einer Breite von etwa 1 mm mit einem feststehenden Kopf aufgezeichnet und abgetastet. Für die Aufzeichnung und Abtastung des Tonsignals ist also die Längsgeschwindigkeit des Bandes und nicht die wesentlich höhere Relativgeschwindigkeit zwischen Kopf und Band auf den Schrägspuren entscheidend. Die Längsgeschwindigkeit des Bandes ist in der Praxis zur Vergrößerung der Gesamtspieldauer eines Bandes auf Werte in der Größenordnung von 2 cm/s verringert worden. Diese geringe Relativgeschwindigkeit zwischen dem Band und dem Tonkopf hat einen nachteiligen Einfluß auf die Qualität des aufgezeichneten Tonsignals. Eine Hifi-Qualität läßt sich bei dieser geringen Relativgeschwindigkeit praktisch nicht mehr erreichen. Das aufgezeichnete Tonsignal hat nur noch eine Bandbreite von etwa 70 Hz bis 7-10 KHz. Wegen der geringen Breite der Längsspur ergibt sich auch ein relativ schlechter Störabstand. Dieser wird bei der Aufzeichnung von zwei Tonsignalen für Stereo-Wiedergabe durch die dann notwendige Halbierung der Breite der Längsspur noch schlechter.

Es ist an sich denkbar, ähnlich wie bei der Bildplatte auch das Tonsignal zusammen mit dem Bildträger auf den Schrägspuren aufzuzeichnen. Eine solche Lösung konnte jedoch in der Praxis bisher nicht erfolgreich realisiert werden. Einerseits ist der verfügbare Frequenzbereich bereits voll ausgenutzt. Der Bereich von etwa 1-1,3 MHz wird von dem in der Frequenz herabgesetzten quadraturmodulierten Farbträger und der Rest des Frequenzbereiches durch das Frequenzspektrum des modulierten Bildträgers eingenommen. Eine Aufzeichnung eines Tonträgers in der noch vorhandenen schmalen Frequenzlücke zwischen dem modulierten Farbträger und dem Frequenzspektrums des Bildträgers ist durch die notwendigen steilen Filterflanken für den Farbträger und den Bildträger wegen der auftretenden Phasen- und Gruppenlaufzeitfehler praktisch nicht möglich. Andererseits entsteht bei der Aufzeichnung des Tonsignals auf den Schrägspuren bei der Wiedergabe eine beträchtliche Störung durch den Kopfwechsel. Bei der Bildwiedergabe stört der Kopfwechsel nicht, weil er während der Vertikalaustastlücke erfolgt. Bei der Wiedergabe des Tonsignals wird jedoch dieser Kopfwechsel als störendes Geräusch hörbar, weil durch den Kopfwechsel die Abtastung des z. B. einem Träger aufmodulierten Tonsignals vom Band jeweils mit 50 Hz kurzzeitig unterbrochen ist. Die dadurch entstehenden nadelförmigen Störimpulse mit einer Grundfrequenz von 50 Hz und einem großen Anteil an Oberwellen erzeugen bei der Tonwiedergabe ein kontinuierliches Störgeräusch.

Eine Möglichkeit, Störungen beim Kopfwechsel zu verringern, wird in der US-A-3 346 702 beschrieben. Ein kontinuierliches auf einem Träger frequenzmoduliertes Signal wird mittels mehrerer Magnetköpfe auf ein Magnetband in Form einer Transversalaufzeichnung mit einander überlappenden Magnetspuren aufgezeichnet. Bei der Wiedergabe werden zur Verringerung von Schaltstörungen durch die Umschaltung von einem Magnetkopf auf den folgenden, die frequenzmodulierten Signale über Schalter geführt, derart, daß die frequenzmodulierten Signale der einen Spur gegenüber denen der anderen Spur mit einer Zeitverzögerung, die innerhalb des Überlappungsbereichs der Magnetspuren liegt, umgeschaltet werden. Nach der Demodulation der einzelnen Spuranteile mit gegeneinander zeitversetzten Störanteilen wird durch Auswahl des jeweils nicht gestörten Signalanteils der beiden Spuren in einem weiteren Schalter das kontinuierliche Signal wieder zusammengesetzt.

Diese Möglichkeit, durch eine derartige Umschaltung Störungen zu verringern, ist sehr aufwendig, da einerseits das frequenzmodulierte Signal der einen Spur zeitlich verzögert umgeschaltet werden muß und andererseits das demodulierte Signal zum richtigen Zeitpunkt aus zwei mit Störanteilen behafteten Signalen zu einem Signal wieder zusammengesetzt werden muß.

Eine andere Möglichkeit, Kopfwechselstörungen zu verringern, wird vom Erfinder dieser Anmeldung in der Anmeldung EP-A-61050 (veröffentlicht am 29.9.82) beschrieben, in welcher bei einem Videorecorder mit Schrägspuraufzeichnung der Videosignale durch mehrere rotierende Magnetköpfe das Tonsignal durch dieselben Magnetköpfe ebenfalls auf den Schrägspuren mit aufgezeichnet wird. Störungen im Tonsignal durch den Kopfwechsel werden verringert, indem die Kopfausgangssignale vor dem Ton-FM-Demodulatoren z. B. durch Verstärkung nur eines der beiden Kopfausgangssignale auf unterschiedliche Amplituden gebracht und dann addiert werden.

Der Erfindung liegt die Aufgabe zugrunde, in einer weiteren einfachen Schaltungsanordnung bei der Aufzeichnung des Tonsignals auf der Spur des Bildträgers die durch den Kopfwechsel bei der Wiedergabe im Ton auftretenden Störungen zu verringern.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgenden Überlegungen und Erkenntnissen. Wenn die notwendige Umschaltung zwischen den beiden Videoköpfen im Weg des abgetasteten FM-Tonträgers erfolgt, gibt es an den Eingängen des einzigen FM-Demodulators unvermeidbare Phasensprünge im Signal. Derartige Phasensprünge werden in einem FM-Demodulator als Signal registriert und erzeugen am Ausgang im NF-Signal eine Störung. Da sich diese Störung mit einer Frequenz von 50 Hz wiederholt, entsteht im wiedergegebenen Tonsignal ein hörbares Knetern. Diese Störung tritt auch dann auf, wenn die Umschaltung einwandfrei und in einer Außerordentlich kurzen Zeit erfolgt. Eine Umschaltung im NF-Signal läßt sich indessen durchführen, ohne daß dadurch eine Störung bei der Wiedergabe hörbar wird. Eine solche Umschaltung ist mit handelsüblichen Schalterbausteinen, wie z. B. integrierten Schaltkreisen, möglich und wird in der Studiotechnik z. B. zum Einblenden eines Ersatzsignals bei Drop-out-Störungen angewendet. Die genannten Störungen durch einen Phasensprung treten nicht mehr auf, weil im Weg des Tonträgers keine Umschaltung erfolgt und die Umschaltung im NF-Signal in einem Zeitpunkt erfolgt, in bem beide Videoköpfe durch die Überlappung in ihren Abtastzeiträumen einen ununterbrochenen Tonträger liefern und somit auch beide FM-Demodulatoren ein ununterbrochenes NF-Tonsignal abgeben.

Der Schaltungsaufwand wird zwar dadurch vergrößert, daß für ein Tonsignal insgesamt zwei FM-Demodulatoren erforderlich sind. Dieser zusätzliche Aufwand kann jedoch durch den Einsatz integrierter Schaltkreise gering gehalten werden. Die Erfindung ist unabhängig von dem Aufzeichnungssystem anwendbar, d. h. beim VHS-System, beim Betamax-System, beim Video 2000-System sowie auch weiteren Systemen mit Schrägspuraufzeichnung mit mehreren Videoköpfen. Durch die Erfindung kann ein Störabstand von > 50 dB erreicht werden. Das bedeutet, daß der Kopfwechsel keine hörbare Störung mehr bei der Tonwiedergabe erzeugt.

Ein Ausführungsbeispiel der Erfindung wird anhand der Zeichnung erläutert. Darin zeigen :

Figur 1    ein Blockschaltbild für die Aufnahme,
Figur 2    ein Blockschaltbild für die Wiedergabe,
Figur 3    Kurven zur Erläuterung der Wirkungsweise der Schaltung nach Figur 2 und
Figur 4    eine praktisch erprobte Schaltung für die Realisierung der NF-Umschaltung für zwei aufgezeichnete Tonsignale.

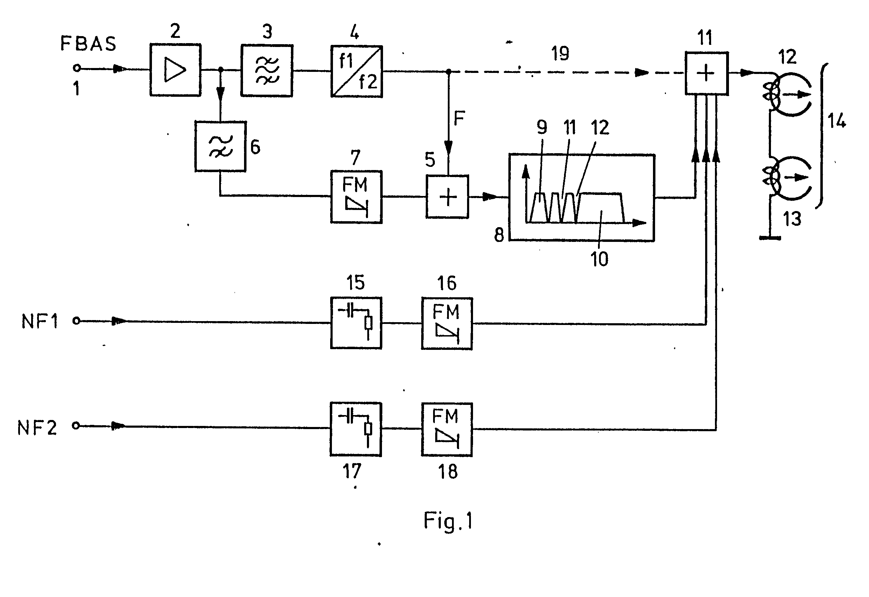

In Figur 1 wird das FBAS-Signal von der Klemme 1 dem Verstärker 2 zugeführt. Mit dem Filter 3 wird der modulierte PAL-Färbträger F von 4,43 MHz ausgewertet und in dem Frequenzumsetzer 4 auf eine Frequenz von 0,63 MHz heruntergesetzt. Dieser Farbträger F gelangt auf die Addierstufe 5. Mit dem Tiefpaß 6 wird das Leuchtdichtesignal Y ausgewertet und in dem FM-Modulator 7 einem Träger aufmoduliert. Dieser gelangt ebenfalls auf die Addierstufe 5. Das Ausgangssignal der Addierstufe 5 wird dem Filter 8 zugeführt. Dieses Filter enthält einen Durchlaßbereich 9 für den in der Frequenz herabgesetzten Farbträger F sowie einen Durchlaßbereich 10 für den mit dem Signal Y modulierten Bildträger. Der Durchlaßbereich 10 enthält eine Sperrstelle 11 bei 1,92 MHz und eine weitere Sperrstelle 12 bei 2,17 MHz. Der Ausgang des Filters 10 ist an einen Eingang der Addierstufe 11 angeschlossen, deren Ausgang an die Reihenschaltung der beiden Videoköpfe 12, 13 angeschlossen ist. Die Videoköpfe 12, 13 zeichnen das Signal von Halbbild zu Halbbild abwechselnd auf Spuren auf, die unter einem Winkel von 6° schräg zur Bandkante des Magnetbandes 14 verlaufen.

Ein Tonsignal NF1 wird über eine zur Anhebung der hohen Frequenzen dienende Preemphasis-Stufe 15 mit einer Zeitkonstante von 50 µs dem FM-Modulator 16 zugeführt. Dieser erzeugt einen mit NF1 frequenzmodulierten Tonträger mit der Frequenz von 1,92 MHz und einem Hub von ± 50 KHz. Dieser Träger wird ebenfalls der Addierstufe 11 zugeführt. Auf ähnliche Weise wird ein zweites Tonsignal NF2 über eine entsprechende Preemphasis-Stufe 17 dem FM-Modulator 18 zugeführt. Dieser liefert einen mit NF2 frequenzmodulierten Tonträger mit einer Frequenz von 2,17 MHz und einem Hub von ± 50 KHz. Dieser zweite Tonträger gelangt ebenfalls auf die Addierstufe 11. Auf dem Band werden also insgesamt aufgezeichnet der in der Frequenz herabgesetzte Farbträger F im Durchlaßbereich 9 des Filters 10, der vom Modulator 7 kommende, mit dem Signal Y frequenzmodulierte Bildträger im Durchlaßbereich 10, der mit NF1 modulierte Tonträger im Sperrbereich 11 des Filters 8 und der mit NF2 frequenzmodulierte Tonträger im Sperrbereich 12 des Filters 8. Die Sperrstellen 11, 12 dienen dazu, die von den Tonträgern eingenommenen Frequenzbereiche im modulierten Bildträger auszusparen und eine Störung des Tones durch das Bildsignal zu verringern. Das Filter 8 ist vorzugsweise durch Notch-Filter realisiert. Die Zuführung des Farbträgers F zum modulierten Bildträger vor dem Filter 8 hat folgenden Vorteil. Der Farbträger F nimmt an sich nur den Frequenzbereich ein, der durch den Durchlaßbereich 9 des Filters 8 angedeutet ist, also einen Frequenzbereich von 0,63 MHz ± 500 KHz. In der Praxis hat aber dieser modulierte Farbträger auch Frequenzanteile, die höher liegen und in den Frequenzbereich fallen, der von den beiden Tonträgern eingenommen wird. Dadurch kann der Farbträger Störungen im Ton verursachen. Bei der dargestellten Schaltung werden derartige Frequenzanteile des Farbträgers F im Bereich der Sperrstellen 11, 12 wieder beseitigt. Im Prinzip kann der Farbträger F jedoch auch über die Leitung 19 direkt der Addierstufe 11 zugeführt werden. Dann braucht das Filter 8 den Durchlaßbereich 9 nicht zu haben.

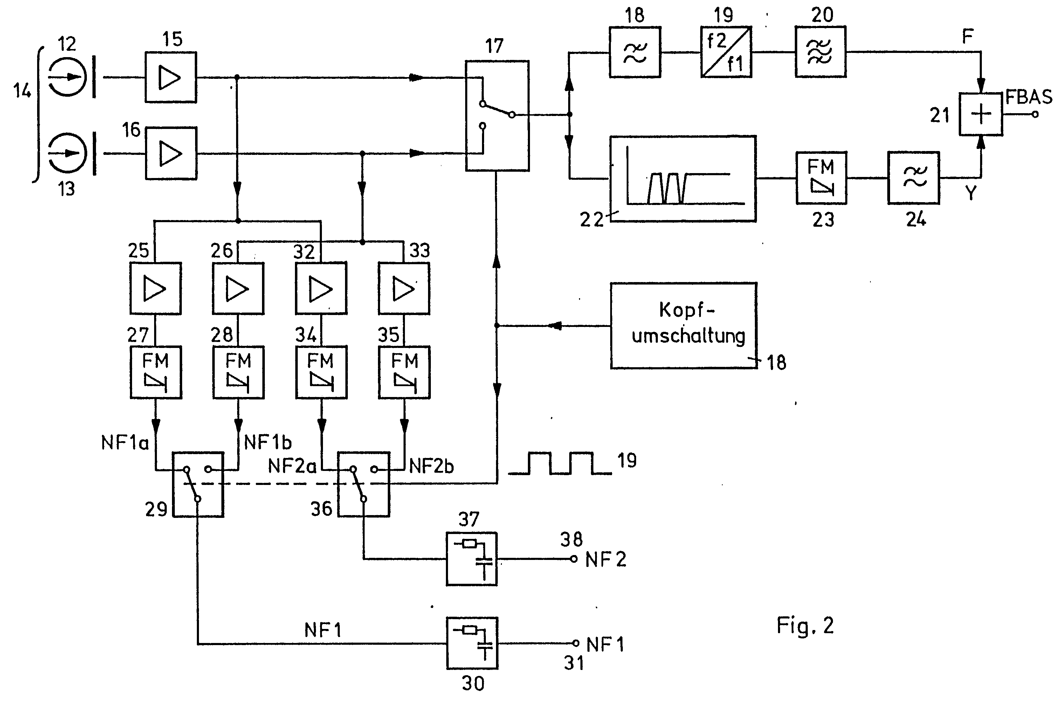

Figur 2 zeigt eine Wiedergabeschaltung für das gemäß Figur 1 aufgezeichnete Signal. Die Signale von den beiden Videoköpfen 12, 13 gelangen über Vorverstärker 15, 16 auf die beiden Eingänge des Umschalters 17. Dieser wird von der Kopfumschaltung-Steuereinheit 18 mit dem Kopfwechselimpuls 19 jeweils zu Beginn eines Halbbildes betätigt und liefert an seinem Ausgang ein kontinuierliches Signal. Daraus wird der Farbträger F mit dem Tiefpaß 18 ausgewertet, in dem Frequenzumsetzer 19 wieder auf die ursprüngliche PAL-Farbträgerfrequenz von 4,43 MHz umgesetzt und über den Bandpaß 20 der Addierstufe 21 zugeführt. Mit dem Filter 22 wird der modulierte Bildträger im Durchlaßbereich 10 von Figur 1 ausgewertet. Die Durchlaßkurve des Filters 22 enthält wieder zwei Sperrstellen bei den Frequenzen 1,92 MHz und 2,17 MHz. Der Bildträger gelangt zu dem FM-Demodulator 23, der über den Tiefpaß 24 das Leuchtdichtesignal Y an die Addierstufe 21 liefert. Am Ausgang der Addierstufe 21 steht somit das FBAS-Signal für die Bildwiedergabe.

· Die Ausgänge der Vorverstärker 15, 16 werden außerdem zwei selektiven Verstärkern 25, 26 zugeführt, die auf die Frequenz von 1,92 MHz abgestimmt sind. Die selektiv ausgewerteten Tonträger gelangen auf zwei FM-Demodulatoren 27, 28. Der Demodulator 27 liefert somit das Tonsignal NF1a vom Videokopf 12 und der Demodulator 28 das Tonsignal NF1b vom Videokopf 13. Im Weg dieser NF-Tonsignale liegt der Umschalter 29, der ebenfalls von dem Kopfwechselimpuls 19 betätigt wird. Der Umschalter 29 liefert das kontinuierliche Tonsignal NF1, das von Halbbild zu Halbbild abwechselnd vom Videokopf 12 und vom Videokopf 13 kommt. Dieses Signal wird über die Deemphasis-Stufe 30 mit einer Zeitkonstante von 50 μs geführt und erscheint an der Klemme 31 als entzerrtes Tonsignal NF1, das keine Störungen mehr durch den Kopfwechsel aufweist.

Auf gleiche Weise wird mit dem auf die Frequenz 2,17 MHz abgestimmten Verstärkern 32, 33 und den entsprechend abgestimmtem FM-Demodulatoren 34, 35 sowie dem Umschalter 36 und der Deemphasis-Stufe 37 das kontinuierliche Tonsignal NF2 an der Klemme 38 gewonnen. Die Signale NF1, NF2 sind ein Stereo-Tonsignal. Sie können auch ein Tonsignal in verschiedenen Sprachen darstellen.

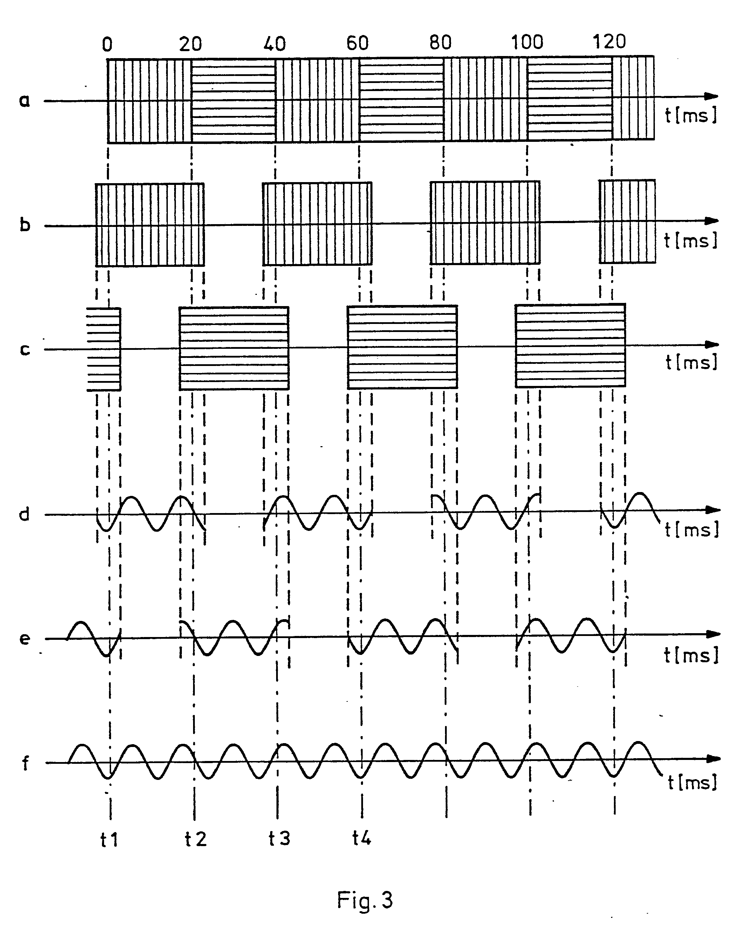

Figur 3a zeigt den modulierten Bildträger am Ausgang des Umschalters 17 für aufeinanderfolgende Halbbilder, die je eine Dauer von 20 ms haben. Die dargestellten, abwechselnd waagerecht und senkrecht schraffierten Flächen entsprechen also Bildträgerpaketen, die abwechselnd von den beiden Videoköpfen 12, 13 kommen. Das Signal gemäß Figur 3a entsteht durch eine harte Umschaltung in dem Umschalter 17. Eine solche harte Umschaltung im Weg des trägerfrequenten Signals ist für die Bildwiedergabe nicht störend, weil während dieser Zeit, nämlich der Vertikalaustastzeit, keine Bildwiedergabe erfolgt. Für die Tonwiedergabe würde dadurch aber ein Störsignal entstehen. Figur 3b zeigt den modulierten Tonträger am Ausgang des Verstärkers 25 und Figur 3c den modulierten Tonträger am Ausgang des Verstärkers 26. Die Abtastung durch die Videoköpfe 12, 13 hat einen Überlappungsbereich, so daß für eine Zeitdauer von ca. 1 ms sowohl ein Tonträger vom Kopf 12 als auch ein Tonträger vom Kopf 13 vorhanden ist. Durch Demodulation des Tonträgers gemäß 3b entsteht das NF-Signal gemäß Figur 3d und durch Demodulation des Tonträgers gemäß 3c das NF-Signal gemäß Figur 3e. Die gewonnenen NF-Signale haben also ebenfalls einen Überlappungsbereich. Jeweils zu den Zeitpunkten t1, t2, t3, t4... erfolgt die Umschaltung mit dem Umschalter 29. Hier erfolgt also ein trägheitsloser, harter Übergang zwischen den NF-Signalen gemäß Figur 3d und Figur 3e. Dadurch ergibt sich ein kontinuierliches NF-Tonsignal gemäß Figur 3f, das an der Klemme 31 zur Verfügung steht und keine Störsignale enthält, die bei der Tonwiedergabe hörbar werden. Das gleiche gilt für die Verarbeitung des Tonsignals NF2.

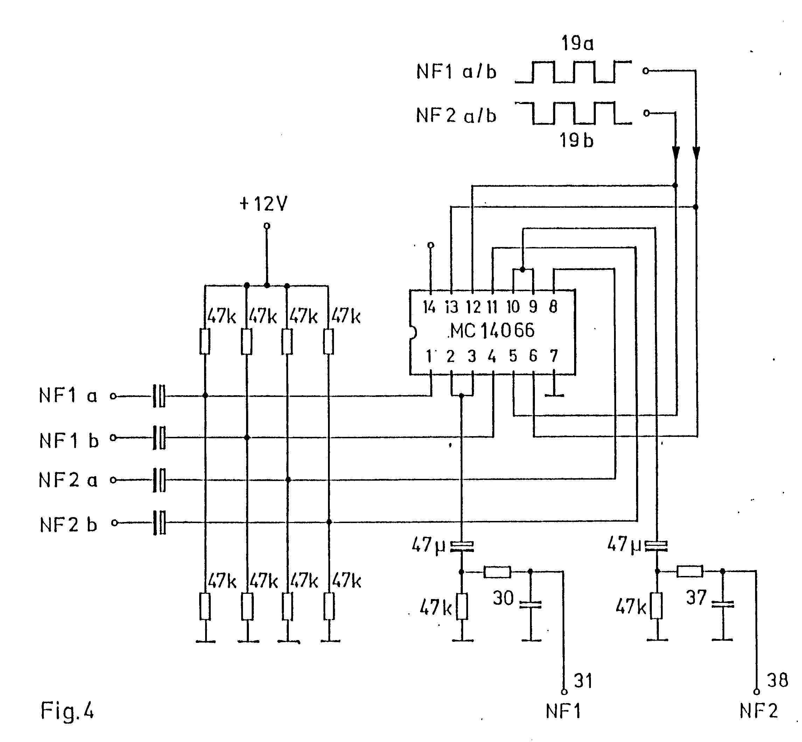

Figur 4 zeigt eine Ausführung für die Umschalter 29 und 36 in Figur 2. Die Signale NF1a, NF1b, NF2a und NF2b sind in der dargestellten Weise an einen als Schalter wirkenden integrierten Schaltkreis vom Typ MC 14066 angelegt. Dieser wird außerdem von den beiden gegenphasigen Kopfwechselimpulsen 19a und 19b gesteuert. Die Impulse 19a bewirken die Umschaltung im Weg des Signals NF1 entsprechend dem Schalter 29 in Figur 2 und die Impulse 19b die Umschaltung im Weg des signals NF2 entsprechend dem Schalter 36 in Figur 2. Als integrierter Schaltkreis kann z. B. ein IC vom Typ MC 14066 B der Firma Motorola verwendet werden.

**Patentansprüche**

1. Videorecorder mit verbesserter Aufzeichnung des Tonsignals, bei dem ein mit dem Videosignal frequenzmodulierter Bildträger und ein mit dem Tonsignal frequenzmodulierter, innerhalb des Frequenzspektrums des Bildträgers liegender Tonträger auf Schrägspuren des Aufzeichnungsträgers mit zwei periodisch einander abwechselnden Videoköpfen (12, 13) aufgezeichnet werden, wobei in Überlappungszonen beide Videoköpfe (12, 13) zugleich wirksam sind und bei der Wiedergabe die Ausgangssignale der beiden Videoköpfe (12, 13) einerseits dem Videosignalweg (17-24) und andererseits dem Tonsignalweg (25-31 ; 32-38) zugeführt werden und eine Umschaltung (17) im Videosignalweg zwischen den von den Videoköpfen (12, 13) kommenden Signalen zu Zeitpunkten während der Überlappungsbereiche erfolgt, dadurch gekennzeichnet, daß bei der Wiedergabe zur Verringerung von Tonstörungen aufgrund des Kopfwechsels die von den Videoköpfen (12, 13) gelieferten Tonträger (Fig. 3b, c) zunächst kontinuierlich zwei getrennten FM-Demodulatoren (27, 28 ; 34, 35) zugeführt werden, dann eine Umschaltung (29 ; 36) hinter den Demodulatoren im NF-Weg erfolgt und die Umschaltung mit demselben Kopfwechselimpuls (19) durchgeführt wird, der den Weg des modulierten Bildträgers zwischen den Videoköpfen (12, 13) im Überlappungsbereich im Videosignalweg umschaltet.

2. Recorder nach Anspruch 1, dadurch gekennzeichnet, daß bei der Aufnahme im Weg des modulierten Bildträgers ein Filter (8) mit jeweils einer Sperrstelle (11, 12) bei der Frequenz des Tonträgers oder mehrerer Tonträger liegt.

3. Recorder nach Anspruch 2, dadurch gekennzeichnet, daß ein modulierter Farbträger (F) dem modulierten Bildträger vor dem Filter (8) hinzugefügt wird und das Filter (8) einen Durchlaßbereich (9) für den Farbträger (f) und seine Seitenbänder aufweist.

4. Recorder nach Anspruch 1, dadurch gekennzeichnet, daß zwei in der Frequenz gegeneinander versetzte Tonträger zur Aufzeichnung eines Stereosignals aufgezeichnet werden.

5. Recorder nach Anspruch 1, dadurch gekennzeichnet, daß die Umschalter (29, 36) als integrierter Schaltkreis ausgebildet sind. (Fig. 4).

## Claims

1. Video recorder having improved recording of the sound signal, in which a picture carrier frequency modulated with the video signal, and a sound carrier lying within the frequency spectrum of the picture carrier and frequency modulated with the sound signal are recorded on diagonal tracks of the recording medium by means of two periodically interchanging video heads (12, 13), whereby both video heads (12, 13) are operative together in overlapping zones and upon the reproduction the output signals of both video heads (12, 13) are applied on the one hand to the video signal channel (17-24) and on the other hand to the sound signal channel (25-31 ; 32-38) and a switching over (17) occurs in the video signal channel between the signals coming from the video heads (12, 13) at instants during the ranges of overlap, characterized in that for the purpose of reducing the distortion of the sound upon reproduction on account of the head changing, the sound carriers (Fig. 3b, c) delivered by the video heads (12, 13) are first applied continually to two separate FM- demodulators (27, 28 ; 34, 35), thereafter switching over (29 ; 36) is carried out after the demodulators in the low frequency channel, and the switching over is carried out with the same head changing impulse (19) which switches the channel of the modulated picture carrier between the video heads (12, 13) in the overlapping ranges in the video signal channel.

2. Recorder according to Claim 1, characterized in that upon the reception, a filter (8) having a stop position (11, 12) at the frequency of the sound carrier or the several sound carriers is placed in the channel of the modulated picture carrier.

3. Recorder according to Claim 2, characterized in that a modulated colour carrier (F) is added to the modulated picture carrier prior to the filter (8) and the filter (8) exhibits a pass range (9) for the colour carrier (F) and its side bands.

4. Recorder according to Claim 1, characterized in that two sound carriers separated in their frequency relative to one another are recorded for the purpose of recording a stereo signal.

5. Recorder according to Claim 1, characterized in that the switches (29, 36) are constructed as integrated switching circuits. (Fig. 4)

## Revendications

1. Enregistreur vidéo produisant un enregistrement amélioré du signal sonore et dans lequel une porteuse-image modulée en fréquence avec le signal vidéo et une porteuse sonore modulée en fréquence avec le signal sonore et placée à l'intérieur du spectre de fréquence de la porteuse-image sont enregistrées sur des pistes inclinées du support d'enregistrement au moyen de deux têtes vidéo (12, 13) utilisées de façon alternée, les deux têtes vidéo (12, 13) agissant de façon identique dans des zones de chevauchement et, lors de la reproduction, les signaux de sortie des deux têtes vidéo (12, 13) étant appliqués d'une part à la voie de signaux vidéo (17-24) et d'autre part à la voie de signaux sonores (25-31 ; 32-38) et une commutation (17) étant effectuée dans la voie des signaux vidéo entre les signaux provenant des têtes vidéo (12, 13) à des instants rentrant dans les zones de chevauchement, caractérisé en ce que, lors de la reproduction et pour réduire les perturbations sonores par suite du changement de tête, les porteuses sonores (figures 3b, c) fournies par les têtes vidéo (12, 13) sont initialement appliquées de façon continue à deux démodulateurs FM séparés (27, 28 ; 34, 35), puis une commutation (29 ; 36) est effectuée en aval des démodulateurs dans la voie BF et la commutation est réalisée avec la même impulsion de changement de tête (19) qui provoque la commutation de la voie de la porteuse-image modulée entre les têtes vidéo (12, 13) dans une zone de chevauchement dans la voie des signaux vidéo.

2. Enregistreur selon la revendication 1, caractérisé en ce que, lors de l'enregistrement, il est prévu dans la voie de la porteuse-image modulée un filtre (8) comportant une zone de coupure (11, 12) correspondant à la fréquence de la porteuse sonore ou de plusieurs porteuses sonores.

3. Enregistreur selon la revendication 2, caractérisé en ce qu'une porteuse couleur modulée F est combinée avec la porteuse-image modulée en amont du filtre (8) et le filtre (8) comporte une plage de passage (9) pour la porteuse couleur (F) et ses bandes latérales.

4. Enregistreur selon la revendication 1, caractérisé en ce que deux porteuses sonores décalées en fréquence l'une par rapport à l'autre sont enregistrées pour l'enregistrement d'un signal stéréo.

5. Enregistreur selon la revendication 1, caractérisé en ce que les commutateurs (29, 36) sont agencés sous forme de circuits intégrés de commutation (figure 4).

Fig.1

Fig. 2

0 068 188

Fig. 3

Fig.4